# EUROPEAN PATENT APPLICATION

(11) **EP 4 554 302 A1**
(43) Date of publication of application: **14.05.2025**
(21) Application number: 23838560.3
(22) Date of filing: 25.05.2023
(51) Int. Cl.: H04W 72/04

(54) **METHOD AND DEVICE FOR ESTABLISHING COMMUNICATION CONNECTION AND READABLE STORAGE MEDIUM**

(30) Priority: 09.07.2022 CN 202210807207
(71) Applicant: Datang Mobile Communications Equipment Co., Ltd., Beijing 100085 (CN)
(72) Inventor: CHEN, Li, Beijing 100085 (CN); SUN, Shaohui, Beijing 100085 (CN); AI, Ming, Beijing 100085 (CN); CHENG, Fangchen, Beijing 100085 (CN); ZHAO, Jinbo, Beijing 100085 (CN)
(74) Representative: Maiwald GmbH
(86) International application number: PCT/CN2023/096277
(87) International publication number: WO 2024/012066

(57) **Abstract**

The present disclosure provides a method and a device for establishing a communication connection, and a readable storage medium, which relates to the field of communication technologies. The method includes: transmitting, by a DDU, a first request to an AP, where the first request is used to establish an interface between the DDU and the AP; or, receiving, by a DDU, a second request from an AP, where the second request is used to establish an interface between the AP and the DDU.

## Description

### CROSS-REFERENCE TO RELATED APPLICATION

This application claims a priority to Chinese Patent Application No. 202210807207.4 filed on July 9, 2022, which is incorporated in its entirety by reference herein.

### TECHNICAL FIELD

The present disclosure relates to the field of communication technologies, and in particular to a method for establishing a communication connection, a device for establishing a communication connection, and a readable storage medium.

### BACKGROUND

In fifth-generation mobile communication (5th-Generation, 5G) radio network systems, an NR node (NR Node B, gNB) may be an integrated base station, and all user plane protocol stacks and functions are in a single entity; or, the gNB may be divided into a central unit (Central Unit, CU) and a distributed unit (Distributed Unit, DU) (as shown in FIG. 1), where the CU includes a control plane (Control Plane, CU-CP) and a user plane (User Plane, CU-UP), and transmission/reception points (Transmit/Receive Point, TRP) are connected under the DU. In 5G, control plane and user plane protocol stacks are divided between the CU and the DU in a hard partition manner, as shown in FIG. 2 and FIG. 3.

The user plane protocol stack functions are broadly as follows:
a service data adaptation protocol (Service Data Adaptation Protocol, SDAP) layer: mapping of quality of service (Quality of Service, QoS) flows to data radio bearers (Data Radio Bearer, DRB), and adding QoS flow ID (QoS Flow ID, QFI) identifications to data packets;
a packet data convergence protocol (Packet Data Convergence Protocol, PDCP) layer: encryption, integrity protection, header compression, duplicate detection and discarding, routing and duplication (duplication), and maintenance of PDCP sequence number (Sequence Number, SN);
a radio link control (Radio Link Control, RLC) layer: automatic repeat request (Automatic Repeat request, ARQ) error detection/ error correction, segmentation/re-segmentation, and duplicate detection;
a medium access control (Medium Access Control, MAC) layer: logical channel and transmission channel mapping, logical channel multiplexing/demultiplexing, resource scheduling, and logical channel priority.

Data packets are processed by each layer, with subheaders added layer by layer, and transport blocks for transmission at a physical layer are finally formed.

In the sixth generation mobile communications (6th-Generation, 6G), a user-centric network will be introduced. The basic idea of the user-centric network is to flexibly organize network access points (Access Point, AP) to form flexible cells to provide data transmission for terminals based on terminal locations and service requirements. However, the design of the 5G protocol stack can not meet the requirement of the user-centric network.

### SUMMARY

Embodiments of the present disclosure provide a method for establishing a communication connection, to flexibly deploy user plane functions so as to meet the requirement of the user-centric network.

In a first aspect, embodiments of the present disclosure provide a method for establishing a communication connection, including:
transmitting, by a distributed data unit (Distributed Data Unit, DDU), a first request to an access point (AP), where the first request is used to establish an interface between the DDU and the AP; or,
receiving, by a distributed data unit (DDU), a second request from an access point (AP), where the second request is used to establish an interface between the AP and the DDU.

Optionally, before the transmitting, by a DDU, a first request to an AP, the method further includes:
transmitting, by the DDU, a third request to the AP, where the third request is used to inquire about a neighboring AP.

Optionally, the method further includes:
updating, by the DDU, user plane function allocation between the DDU and the AP.

Optionally, the method further includes:
allocating, by the DDU, user plane functions to the DDU and the AP; or,
obtaining, by the DDU, an allocation result of user plane functions from a control plane node.

Optionally, the allocating, by the DDU, user plane functions to the DDU and the AP includes:
allocating, by the DDU, the user plane functions to the DDU and the AP, and notifying the AP of an allocation result of the user plane functions; or,
allocating, by the DDU, the user plane functions to the DDU and the AP based on a request from the AP, and notifying the AP of an allocation result of the user plane functions.

Optionally, the user plane functions include one or more of:
a security protection function, responsible for air interface security and/or integrity protection;
a data efficiency function, used for header compression of air interface data packets;
a flow mapping function, used for mapping quality of service (QoS) flows or IP flows to data bearers transmitted over air interface, or decomposing air interface data bearers into QoS flows or IP flows;
a packet organization function, used for organizing packets entering an access network into transport blocks for transmission at a physical layer;
a resource management function, responsible for radio resource management, allocation, and transmission scheduling;
a reliability control function, used for controlling reliability of air interface transmission; or,
a physical layer transmission or reception function, used for mapping transport blocks of a higher layer to a physical layer.

Optionally, the packet organization function includes: a first packet organization function and a second packet organization function, where the first packet organization function is responsible for processing data packets of bearers, and the second packet organization function is responsible for processing data of different logical channels; and/or,
the reliability control function includes: a first reliability control function and a second reliability control function, where the first reliability control function is used for determining a higher layer reliability strategy, and the second reliability control function is used for determining a physical layer reliability strategy.

In a second aspect, embodiments of the present disclosure provide a method for establishing a communication connection, including:
transmitting, by an access point (AP), a second request to a distributed data unit (DDU), where the second request is used to establish an interface between the AP and the DDU; or,
receiving, by an access point (AP), a first request from a distributed data unit (DDU), where the first request is used to establish an interface between the DDU and the AP.

Optionally, before the transmitting, by an AP, a third request to a DDU, the method further includes:
receiving, by the AP, a third request from the DDU, where the third request is used to inquire about a neighboring AP.

Optionally, the method further includes:
updating, by the AP, a connection relationship with a terminal.

Optionally, the method further includes:
updating, by the AP, user plane function allocation between the DDU and the AP.

Optionally, the method further includes:
requesting, by the AP, the DDU to allocate user plane functions, and obtaining an allocation result of the user plane functions from the DDU.

Optionally, the user plane functions include one or more of:
a security protection function, responsible for air interface security and/or integrity protection;
a data efficiency function, used for header compression of air interface data packets;
a flow mapping function, used for mapping quality of service (QoS) flows or IP flows to data bearers transmitted over air interface, or decomposing air interface data bearers into QoS flows or IP flows;
a packet organization function, used for organizing packets entering an access network into transport blocks for transmission at a physical layer;
a resource management function, responsible for radio resource management, allocation, and transmission scheduling;
a reliability control function, used for controlling reliability of air interface transmission; or,
a physical layer transmission or reception function, used for mapping transport blocks of a higher layer to a physical layer.

Optionally, the packet organization function includes: a first packet organization function and a second packet organization function, where the first packet organization function is responsible for processing data packets of bearers, and the second packet organization function is responsible for processing data of different logical channels; and/or,
the reliability control function includes: a first reliability control function and a second reliability control function, where the first reliability control function is used for determining a higher layer reliability strategy, and the second reliability control function is used for determining a physical layer reliability strategy.

In a third aspect, embodiments of the present disclosure provide a device for establishing a communication connection, which is applied to a DDU, including: a memory, a transceiver, and a processor;
the memory is configured to store a computer program, the transceiver is configured to transmit and receive data under control of the processor, and the processor is configured to read the computer program in the memory to perform following operation:
transmitting a first request to an access point (AP), where the first request is used to establish an interface between the DDU and the AP; or,
receiving a second request from an access point (AP), where the second request is used to establish an interface between the AP and the DDU.

Optionally, the processor is further configured to read the computer program in the memory to perform following operation:
transmitting a third request to the AP, where the third request is used to inquire about a neighboring AP.

Optionally, the processor is further configured to read the computer program in the memory to perform following operation:
updating user plane function allocation between the DDU and the AP.

Optionally, the processor is further configured to read the computer program in the memory to perform following operation:
allocating user plane functions to the DDU and the AP; or,
obtaining an allocation result of user plane functions from a control plane node.

Optionally, the processor is further configured to read the computer program in the memory to perform following operation:
allocating the user plane functions to the DDU and the AP, and notifying the AP of an allocation result of the user plane functions; or,
allocating the user plane functions to the DDU and the AP based on a request from the AP, and notifying the AP of an allocation result of the user plane functions.

In a fourth aspect, embodiments of the present disclosure provide a device for establishing a communication connection, which is applied to an AP, including: a memory, a transceiver, and a processor;
the memory is configured to store a computer program, the transceiver is configured to transmit and receive data under control of the processor, and the processor is configured to read the computer program in the memory to perform following operation:
transmitting a second request to a distributed data unit (DDU), where the second request is used to establish an interface between the AP and the DDU; or,
receiving a first request from a distributed data unit (DDU), where the first request is used to establish an interface between the DDU and the AP.

Optionally, the processor is further configured to read the computer program in the memory to perform following operation:
receiving a third request from the DDU, where the third request is used to inquire about a neighboring AP.

Optionally, the processor is further configured to read the computer program in the memory to perform following operation:
updating a connection relationship with a terminal.

Optionally, the processor is further configured to read the computer program in the memory to perform following operation:
updating user plane function allocation between the DDU and the AP

Optionally, the processor is further configured to read the computer program in the memory to perform following operation:
requesting the DDU to allocate user plane functions, and obtaining an allocation result of the user plane functions from the DDU.

In a fifth aspect, embodiments of the present disclosure provide a device for establishing a communication connection, which is applied to a DDU, including:
a first processing unit, configured to transmit a first request to an access point (AP), where the first request is used to establish an interface between the DDU and the AP; or,
a second processing unit, configured to receive a second request from an access point (AP), where the second request is used to establish an interface between the AP and the DDU.

In a sixth aspect, embodiments of the present disclosure provide a device for establishing a communication connection, which is applied to an AP, including:
a first transmission unit, configured to transmit a second request to a distributed data unit (DDU), where the second request is used to establish an interface between the AP and the DDU; or,
a first reception unit, configured to receive a first request from a distributed data unit (DDU), where the first request is used to establish an interface between the DDU and the AP.

In a seventh aspect, embodiments of the present disclosure further provide a processor readable storage medium, on which a computer program is stored. When the computer program is executed by a processor, the steps in the method for establishing the communication connection as described above are implemented.

In the embodiments of the present disclosure, the interface is established between the DDU and the AP, so that the control plane node or the DDU can allocate the user plane functions to the DDU and the AP. In this way, flexible allocation of the user plane functions can be achieved, thereby meeting the requirement of the user-centric network.

### BRIEF DESCRIPTION OF THE DRAWINGS

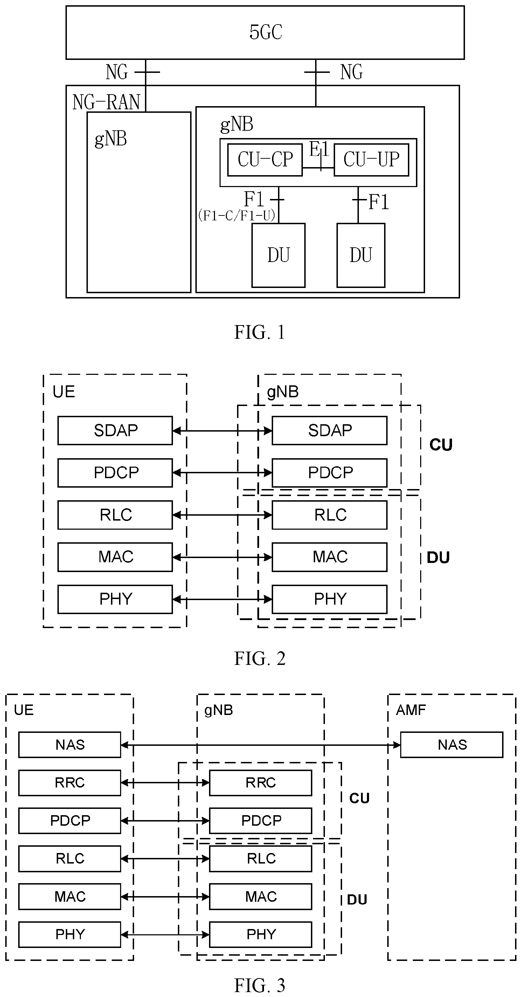

FIG. 1 is a schematic diagram of protocol stacks of a 5G network system;
FIG. 2 and FIG. 3 are schematic diagrams of 5G control plane and user plane protocol stacks;

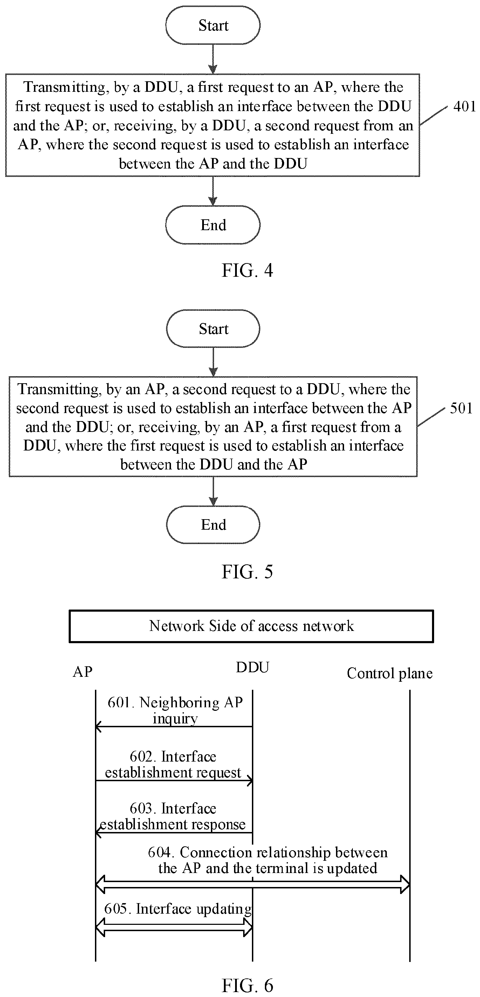

FIG. 4 is a first flow chart of a method for establishing a communication connection according to embodiments of the present disclosure;
FIG. 5 is a second flow chart of a method for establishing a communication connection according to embodiments of the present disclosure;
FIG. 6 is a third flow chart of a method for establishing a communication connection according to embodiments of the present disclosure;

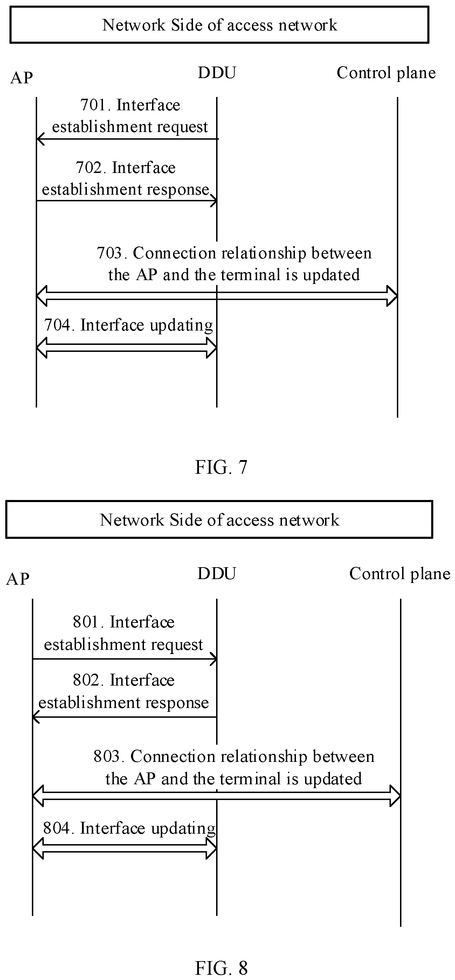

FIG. 7 is a fourth flow chart of a method for establishing a communication connection according to embodiments of the present disclosure;
FIG. 8 is a fifth flow chart of a method for establishing a communication connection according to embodiments of the present disclosure;

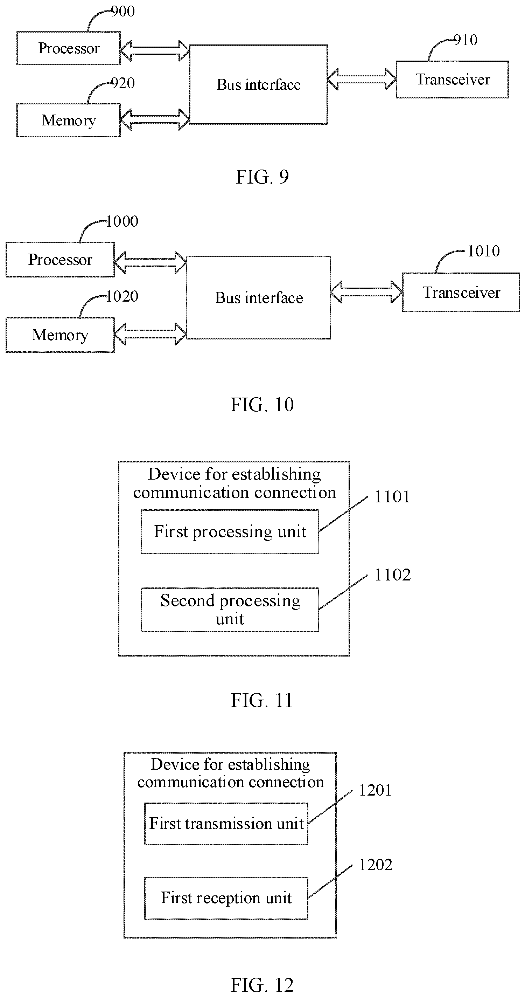

FIG. 9 is a first schematic diagram of a device for establishing a communication connection according to embodiments of the present disclosure;
FIG. 10 is a second schematic diagram of a device for establishing a communication connection according to embodiments of the present disclosure;
FIG. 11 is a third schematic diagram of a device for establishing a communication connection according to embodiments of the present disclosure; and
FIG. 12 is a fourth schematic diagram of a device for establishing a communication connection according to embodiments of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

Embodiments of the present disclosure provide a method and a device for establishing a communication connection, to flexibly deploy user plane functions so as to meet the requirement of the user-centric network.

The method and the device are based on the same application concept. Since the principles of solving problems in the method and the device are similar, reference may be made to each other for implementations of the device and the method, the repetition of which is not further provided herein.

Reference is to FIG. 4, which is a flow chart of a method for establishing a communication connection according to embodiments of the present disclosure. As shown in FIG. 4, the method includes the following step.

Step 401: transmitting, by a distributed data unit (DDU), a first request to an access point (AP), where the first request is used to establish an interface between the DDU and the AP; or, receiving, by a distributed data unit (DDU), a second request from an access point (AP), where the second request is used to establish an interface between the AP and the DDU.

That is, in the embodiments of the present disclosure, the DDU may initiate the process of establishing the interface, or the AP may initiate the process of establishing the interface.

The second request from the AP may include a capability of user plane functions supported by the AP, user plane functions that the AP expects to include, or the like.

In the embodiments of the present disclosure, the interface is established between the DDU and the AP, so that the control plane node or the DDU can allocate the user plane functions to the DDU and the AP. In this way, flexible allocation of the user plane functions can be achieved, thereby meeting the requirement of the user-centric network.

Optionally, based on the above embodiments, if the DDU requests to establish the interface, the DDU may further receive a response message from the AP, so as to determine that the establishment of the interface between the DDU and the AP is completed.

Based on the above embodiments, if the AP requests to establish the interface, the DDU may further transmit a third request to the AP, where the third request is used to inquire about a neighboring AP. The DDU may transmit the third request when AP access is detected, or may transmit the third request to surrounding APs by broadcasting.

In the embodiments of the present disclosure, the user plane of the access network includes two entities: a distributed data unit and an access point. The allocation of user plane functions in the embodiments of the present disclosure refers to allocation of user plane functions for a single terminal or a group of terminals.

The functions of the distributed data unit are introduced as follows.

Basic functions: for downlink transmission, it is the entity that obtains packets entering the access network side; for uplink transmission, it is the entity that restores data packets transmitted by the opposite end into packets and transmits them out of the access network. The distributed data unit may obtain the packets entering the access network side in the following manner: obtaining from a user plane of a core network; or, obtaining from a local service data center; or, obtaining from other distributed data units.

Extended functions: sharing user plane functions with APs, where user plane functions are flexibly allocated between the distributed data unit and the APs. The distributed data unit supports all user plane functions by default, and implements user plane function matching based on access point AP capabilities, requirements and/or terminal requirements.

The functions of the AP are as follows.

Basic functions: a network-side entity that communicates directly with the terminal, and the AP may include one or more TRPs.

Extended functions: sharing user plane functions with the DDU, where user plane functions are flexibly allocated between distributed the data unit and the AP.

An interface is provided between the DDU and the AP.

In the embodiments of the present disclosure, the user plane may be decomposed into at least one of the following functions or a combination thereof according to function division. The functions may be called by each other and connected to each other. The following is an example of division of user plane functions. In actual applications, user plane functions may be divided in other ways.

The user plane functions may be divided into:
a security protection function, responsible for air interface security and/or integrity protection;
a data efficiency function, responsible for header compression (such as robust header compression (RObust Header Compression, ROHC), Ethernet header compression (Ethernet Header Compression, EHC)) or content compression (such as uplink data compression (Uplink Data Compression, UDC)) of air interface data packets;
a flow mapping function, used for mapping quality of service (QoS) flows or IP flows to data bearers transmitted over air interface, or decomposing air interface data bearers into QoS flows or IP flows;
a packet organization function, used for organizing packets (such as IP packets, Ethernet packets, etc.) entering an access network into transport blocks (Transport Block, TB) for transmission at a physical layer, which includes segmentation/re-segmentation of the RLC layer of the 5G user plane, cascading and multiplexing of the MAC layer, or other functions; optionally, the packet organization function may be further decomposed into a first packet organization function and a second packet organization function; the first data packet organization function is responsible for processing data packets of one bearer, which may include cascading/segmentation/re-segmentation, etc., and the second packet organization function is responsible for processing data of different logical channel, such as multiplexing, logical channel priority processing, and organizing into TBs;
a resource management function, responsible for radio resource management, allocation, and transmission scheduling;
a reliability control function, used for controlling reliability of air interface transmission, such as whether to use Hybrid Automatic Repeat Request (HARQ) for retransmission and the quantity of retransmissions, whether duplication is required, etc.; optionally, the reliability control function may be further decomposed into a first reliability control function and a second reliability control function; the first reliability control function is responsible for determining a higher layer reliability strategy, such as whether to perform repeat transmission of higher layer data packets and specific repeat mechanism and parameters involved (duplication, such as direct routing and repeat transmission of IP packets), whether to retransmit higher layer data packets and specific retransmission mechanism and parameters involved (retransmission, similar to RLC ARQ retransmission), and the second reliability control function is responsible for determining a physical layer reliability strategy, such as an HARQ mechanism;
a physical layer transmission or reception function, used for mapping TBs organized by a higher layer to a physical layer for transmission, which includes modulation coding, redundancy version control, waveform control, multiple-input multiple-output (MIMO) (such as multi user MIMO) processing, etc. Optionally, the physical layer transmission/reception function may be decomposed into a first physical layer transmission/reception function and a second physical layer transmission/reception function. If decomposed into the first physical layer transmission/reception function and the physical layer transmission/reception function, the first physical layer transmission/reception function is responsible for most physical layer processing functions, including modulation coding, waveform control, MIMO processing, etc.; the second physical layer transmission/reception function is responsible for specific physical layer signal transmission, similar to the Remote Radio Head (RRH) function.

In the embodiments of the present disclosure, before or after the interface between the DDU and the AP is established, the DDU allocates user plane functions to the DDU and the AP; or, the DDU obtains an allocation result of user plane functions from a control plane node.

Specifically, in a case that the DDU allocates the user plane functions, the DDU allocates the user plane functions to the DDU and the AP, and notifies the AP of an allocation result of the user plane functions; or, the DDU allocates the user plane functions to the DDU and the AP based on a request from the AP, and notifies the AP of an allocation result of the user plane functions.

That is, in the above process, the DDU may directly allocate the user plane functions to the DDU and the AP, or allocate the user plane functions to the DDU and the AP based on the request of the AP.

Specifically, in a case that the DDU directly allocates the user plane functions to the DDU and the AP, the DDU allocates the user plane functions to the DDU and the AP based on service and transmission requirements of the terminal when allocating the user plane functions.

In a case that the DDU perform allocation at the request of the AP, the DDU may receive a request transmitted by the AP, where the request includes user plane functions selected by the AP. The DDU allocates the user plane functions to the DDU and the AP based on the request and service and transmission requirements of the terminal. When performing allocation, the DDU may consider the user plane functions selected by the AP, thereby allocating, to the AP, user plane functions that better meet requirements the AP.

Optionally, in order to accurately determine the AP, the DDU may further receive first information transmitted by the control plane node, where the first information includes information about the AP.

When allocating the user plane functions, the DDU may also make allocations with reference to other information. For example, the DDU receives a channel quality measurement result transmitted by the control plane node. Or, the DDU receives a channel quality measurement result and/or auxiliary information transmitted by the AP, where the auxiliary information includes service features of the terminal. Or, the target DDU may also obtain capabilities or a type of the target AP, etc. Then, when allocating the user plane functions, the DDU may allocate in combination with the obtained information described above, thereby improving rationality of allocation. The capabilities of the target AP may include coverage, etc., and the type of the target AP may include a relay, a mobile AP, etc.

In the embodiments of the present disclosure, there are many ways for the DDU to allocate the user plane functions.

Specifically, the DDU may determine the allocation of the user plane functions between the DDU and the AP based on one or more pieces of information, such as a specific service scenario, requirements of the terminal, and capabilities or a type of the AP.

For example, the DDU may allocate the physical layer transmission or reception function to the AP; and allocate one or more user plane functions other than the physical layer transmission or reception function among the user plane functions to the DDU.

For example, the DDU may allocate all of the user plane functions to the AP.

For example, the DDU may allocate the following functions to the AP: the packet organization function, the reliability control function, the resource management function, the physical layer transmission or reception function; and allocate the following functions to the DU: the security protection function, the data efficiency function, and the flow mapping function.

For example, the DDU may allocate the following functions to the AP: the second packet organization function, the reliability control function, the resource management function, and the physical layer transmission or reception function; and allocate the following functions to the DU: the first packet organization function, the security protection function, the data efficiency function, and the flow mapping function.

For example, the DDU may allocate all of the user plane functions to the DDU.

In practical applications, the DDU includes a DDU higher part (DDU Higher part, DDU-H) and a DDU lower part (DDU Lower part, DDU-L). Then, when allocating user plane functions to the DDU, it may be considered that the user plane functions are allocated to the DDU-H and the DDU-L respectively. That is, the DDU-H and the DDU-L jointly assume the user plane functions allocated to the DDU.

Similarly, in a case that the user plane functions are allocated by the control plane node, that is, the DDU directly obtaining the allocation result from the control plane node, the control plane node may determine the allocation of the user plane functions between the DDU and the AP based on one or more pieces of information from a channel measurement result, and capabilities or a type of the AP. Optionally, the control plane node may also consider service and transmission requirements of the terminal when performing the allocation.

For the specific allocation method of the user plane functions between the DDU and the AP, reference may be made to the above description.

Optionally, based on the above embodiments, the DDU updates user plane function allocation between the DDU and the AP. For example, when the allocation of the user plane functions between the DDU and the AP changes, the user plane function allocation may be updated. Specifically, the DDU may notify the AP of the updated content, or the DDU and the AP may negotiate. Or, in a case that there are no commonly supported terminals between the AP and the DDU, the connection relationship is deleted by default.

Reference is made to FIG. 5, which is a flow chart of a method for establishing a communication connection according to embodiments of the present disclosure. As shown in FIG. 5, the method includes the following step.

Step 501: transmitting, by an access point (AP), a second request to a distributed data unit (DDU), where the second request is used to establish an interface between the AP and the DDU; or, receiving, by an access point (AP), a first request from a distributed data unit (DDU), where the first request is used to establish an interface between the DDU and the AP.

The second request from the AP may include a capability of user plane functions supported by the AP, user plane functions that the AP expects to include, or the like.

Optionally, before the AP transmits the second request to the DDU, the AP may further receive a third request transmitted by the DDU, where the third request is used to inquire about a neighboring AP.

In the above process, in a case that the AP initiates the process of establishing the interface, the AP may further receive a response message from the DDU, to complete the establishment of the interface between the AP and the DDU.

In the embodiments of the present disclosure, the interface is established between the DDU and the AP, so that the control plane node or the DDU can allocate the user plane functions to the DDU and the AP. In this way, flexible allocation of the user plane functions can be achieved, thereby meeting the requirement of the user-centric network.

Optionally, in the above process, the AP may also update a connection relationship with the terminal. For example, when a terminal served by the AP changes, the AP may update the connection relationship with the terminal.

Optionally, in the above process, the AP may also request the DDU to allocate the user plane functions, and obtain an allocation result of the user plane functions from the DDU. Specifically, the AP transmits a request to the DDU, where the request includes user plane functions selected by the AP.

For the meaning and the allocation method of the user plane functions, reference may be made to the description of the above embodiments.

Optionally, in the above process, the AP may also update user plane function allocation between the DDU and the AP. For example, the AP may request the DDU to perform updating, or the AP and the DDU may negotiate to perform updating, and so on. Or, in a case that there are no commonly supported terminals between the AP and the DDU, the connection relationship is deleted by default.

The interface establishment and updating process between the DDU and the AP is described hereinafter in conjunction with different drawings.

As shown in FIG. 6, the interface establishment and updating process between the DDU and the AP may include following steps.

Step 601: the DDU transmits a neighboring AP inquiry message. In this step, the DDU may transmit the message when AP access is detected, or the DDU may inquire all surrounding APs by broadcasting.

Step 602: the AP transmits an interface establishment request, which carries a capability of user plane functions supported by the AP and/or user plane functions that the AP expects to include.

Step 603: the DDU transmits an interface establishment response to the AP, which carries a default division of user plane function between the DDU and the AP, which may specifically be the DDU notifying the AP of user plane functions that need to be supported by default.

Step 604: the connection relationship between the AP and the terminal is updated.

Step 605: updating of user plane function allocation is performed between the DDU and the AP, which may also be called interface updating. Specifically, the DDU may notify the AP; or the AP may negotiate with the DDU; or in a case that there are no commonly supported users between the AP and the DDU, the connection relationship may be deleted by default.

As shown in FIG. 7, the interface establishment and updating process between the DDU and the AP may include the following steps.

Step 701: the DDU transmits an interface establishment request to the AP. Prior to this, the corresponding AP is detected by the DDU or the DDU is notified of the corresponding AP by the control plane entity. The request message may carry an AP capability inquiry, where the AP capability inquiry includes inquire about a capability of user plane functions supported by the AP.

Step 702: the AP transmits an interface establishment response to the DDU, which carries the capability of user plane functions supported by the AP and/or user plane functions that the AP expects to include.

Step 703: the connection relationship between the AP and the terminal is updated.

Step 704: updating of user plane function allocation is performed between the DDU and the AP, which may also be called interface updating. Specifically, the DDU may notify the AP; or the AP may negotiate with the DDU; or in a case that there are no commonly supported users between the AP and the DDU, the connection relationship may be deleted by default.

As shown in FIG. 8, the interface establishment and updating process between the DDU and the AP may include the following steps.

Step 801: the AP transmits an interface establishment request to the DDU, which carries a capability of user plane functions that the AP can include and/or user plane functions that the AP expects to include. Before this step, the DDU is detected by the AP, or the control plane entity notifies the AP of its corresponding DDU.

Step 802: the DDU transmits an interface establishment response to the AP, which carries a default division of user plane functions between the DDU and the AP; specifically, the DDU may notify the AP of user plane functions that need to be supported by default.

Step 803: the connection relationship between the AP and the terminal is updated.

Step 804: updating of user plane function allocation is performed between the DDU and the AP, which may also be called interface updating. Specifically, the DDU may notify the AP; or the AP may negotiate with the DDU; or in a case that there are no commonly supported users between the AP and the DDU, the connection relationship may be deleted by default.

In the embodiments of the present disclosure, the interface is established between the DDU and the AP, so that the control plane node or the DDU can allocate the user plane functions to the DDU and the AP. In this way, flexible allocation of the user plane functions can be achieved, thereby meeting the requirement of the user-centric network.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

As shown in FIG. 9, a device for establishing a communication connection of the embodiments of the present disclosure is applied to a DDU, and the device includes: a memory 920, a transceiver 910, and a processor 900;
the memory 920 is configured to store a computer program, the transceiver 910 is configured to transmit and receive data under control of the processor 900, and the processor 900 is configured to read the computer program in the memory 920 to perform following operation:
transmitting a first request to an access point (AP), where the first request is used to establish an interface between the DDU and the AP; or,
receiving a second request from an access point (AP), where the second request is used to establish an interface between the AP and the DDU.

In FIG. 9, a bus architecture may include any quantity of interconnected buses and bridges. Various circuits including one or more processors represented by the processor 900 and a memory represented by the memory 920 are linked. The bus architecture may further link various other circuits together, such as a periphery component, a voltage stabilizer and a power management circuit, which are known in the art and are not further described herein. A bus interface provides an interface. The transceiver 910 may be multiple elements, i.e., including a transmitter and a receiver, providing a unit for communicating with various other devices on transmission media. The processor 900 is in charge of managing the bus architecture and common processes. The memory 920 may store data used by the processor 900 in performing operations.

The processor 900 may be a Central Processing Unit (Central Processing Unit, CPU), an Application Specific Integrated Circuit (Application Specific Integrated Circuit, ASIC), a Field-Programmable Gate Array (Field-Programmable Gate Array, FPGA), or a Complex Programmable Logic Device (Complex Programmable Logic Device, CPLD), or the processor may adopt a multi-core architecture.

The processor 900 is in charge of managing the bus architecture and common processes. The memory 920 may store data used by the processor 900 in performing operations.

Optionally, the processor 900 is further configured to read the program to perform following step:
transmitting a third request to the AP, where the third request is used to inquire about a neighboring AP.

Optionally, the processor 900 is further configured to read the program to perform following step:
updating user plane function allocation between the DDU and the AP.

Optionally, the processor 900 is further configured to read the program to perform following step:
allocating user plane functions to the DDU and the AP; or,
obtaining an allocation result of user plane functions from a control plane node.

Optionally, the processor 900 is further configured to read the program to perform following step:
allocating the user plane functions to the DDU and the AP, and notifying the AP of an allocation result of the user plane functions; or,
allocating the user plane functions to the DDU and the AP based on a request from the AP, and notifying the AP of an allocation result of the user plane functions.

For the meaning of the user plane functions, reference may be made to the description of the above embodiments.

It should be noted that the device according to the embodiments of the present disclosure can implement all the method steps implemented by the DDU in the above method embodiments, and the same technical effects can be realized. The same parts of the present embodiments as the method embodiments, and the beneficial effects, are not further provided herein.

As shown in FIG. 10, a device for establishing a communication connection of the embodiments of the present disclosure is applied to an AP, including: a memory 1020, a transceiver 1010, and a processor 1000;
the memory 1020 is configured to store a computer program, the transceiver 1010 is configured to transmit and receive data under control of the processor 1000, and the processor 1000 is configured to read the computer program in the memory 1020 to perform following operation:
transmitting a second request to a distributed data unit (DDU), where the second request is used to establish an interface between the AP and the DDU; or,
receiving a first request from a distributed data unit (DDU), where the first request is used to establish an interface between the DDU and the AP.

In FIG. 10, a bus architecture may include any quantity of interconnected buses and bridges. Various circuits including one or more processors represented by the processor 1000 and a memory represented by the memory 1020 are linked. The bus architecture may further link various other circuits together, such as a periphery component, a voltage stabilizer and a power management circuit, which are known in the art and are not further described herein. A bus interface provides an interface. The transceiver 1010 may be multiple elements, i.e., including a transmitter and a receiver, providing a unit for communicating with various other devices on transmission media. The processor 1000 is in charge of managing the bus architecture and common processes. The memory 1020 may store data used by the processor 1000 in performing operations.

The processor 1000 may be a CPU, an ASIC, an FPGA or a CPLD, or the processor may adopt a multi-core architecture.

The processor 1000 is in charge of managing the bus architecture and common processes. The memory 1020 may store data used by the processor 1000 in performing operations.

Optionally, the processor 1000 is further configured to read the program to perform following step:
receiving a third request from the DDU, where the third request is used to inquire about a neighboring AP.

Optionally, the processor 1000 is further configured to read the program to perform following step:
updating a connection relationship with a terminal.

Optionally, the processor 1000 is further configured to read the program to perform following step:
updating user plane function allocation between the DDU and the AP.

Optionally, the processor 1000 is further configured to read the program to perform following step:
requesting the DDU to allocate user plane functions, and obtaining an allocation result of the user plane functions from the DDU.

For the meaning of the user plane functions, reference may be made to the description of the above embodiments.

It should be noted that the device according to the embodiments of the present disclosure can implement all the method steps implemented by the AP in the above method embodiments, and the same technical effects can be realized. The same parts of the present embodiments as the method embodiments, and the beneficial effects, are not further provided herein.

As shown in FIG. 11, a device for establishing a communication connection of the embodiments of the present disclosure is applied to a DDU, and the device includes:
a first processing unit 1101, configured to transmit a first request to an access point (AP), where the first request is used to establish an interface between the DDU and the AP; or,
a second processing unit 1102, configured to receive a second request from an access point (AP), where the second request is used to establish an interface between the AP and the DDU.

Optionally, the device further includes:
a first transmission unit, configured to transmit a third request to the AP, where the third request is used to inquire about a neighboring AP.

Optionally, the device further includes:
a first updating unit, configured to update user plane function allocation between the DDU and the AP.

Optionally, the device further includes:
a first allocation unit, configured to allocate user plane functions to the DDU and the AP; or,
a first obtaining unit, configured to obtain an allocation result of user plane functions from a control plane node.

Optionally, the first allocation unit is configured to allocate the user plane functions to the DDU and the AP, and notify the AP of an allocation result of the user plane functions; or, allocate the user plane functions to the DDU and the AP based on a request from the AP, and notify the AP of an allocation result of the user plane functions.

For the meaning of the user plane functions, reference may be made to the description of the above embodiments.

It should be noted that the device according to the embodiments of the present disclosure can implement all the method steps implemented by the DDU in the above method embodiments, and the same technical effects can be realized. The same parts of the present embodiments as the method embodiments, and the beneficial effects, are not repeated herein.

As shown in FIG. 12, a device for establishing a communication connection of the embodiments of the present disclosure is applied to an AP, and the device includes:
a first transmission unit 1201, configured to transmit a second request to a distributed data unit (DDU), where the second request is used to establish an interface between the AP and the DDU; or,
a first reception unit 1202, configured to receive a first request from a distributed data unit (DDU), where the first request is used to establish an interface between the DDU and the AP.

Optionally, the device further includes:
a second reception unit, configured to receive a third request from the DDU, where the third request is used to inquire about a neighboring AP.

Optionally, the device further includes:
a first updating unit, configured to update, via the AP, a connection relationship with a terminal.

Optionally, the device further includes:
a second updating unit, configured to update user plane function allocation between the DDU and the AP.

Optionally, the device further includes:
a first requesting unit, configured to request the DDU to allocate user plane functions, and obtain an allocation result of the user plane functions from the DDU.

It should be noted that the device according to the embodiments of the present disclosure can implement all the method steps implemented by the AP in the above method embodiments, and the same technical effects can be realized. The same parts of the present embodiments as the method embodiments, and the beneficial effects, are not repeated herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the conventional technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the readable storage medium stores a program, and the program, when being execute by a processor, performs various processes in the embodiments of the method for establishing the communication connection described above, and same technical effects can be achieved, the repetition of which is not further provided herein. The readable storage medium may be any available medium or data storage device that the processor may access, including but not limited to a magnetic memory (such as a floppy disk, a hard disk, a magnetic tape, a magneto-optical disk (MO), etc.), an optical memory (such as a compact disk (CD), a digital versatile disc (DVD), a Blu-ray disc (BD), a high-definition versatile disc (HVD), etc.), or a semiconductor memory (such as a read-only memory (ROM), an erasable programmable read-only memory (erasable programmable ROM, EPROM), an electrically erasable programmable read-only memory (electrically EPROM, EEPROM), a non-volatile memory (NAND FLASH), a solid state disk or a solid state drive (SSD)).

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

It should be noted that the terms such as "having" and "including" or any other variants thereof, are intended to cover a non-exclusive inclusion, such that a process, method, article, or apparatus that includes a list of elements not only include those elements but may also include other elements that are not expressly listed or that are inherent to such process, method, article, or apparatus. Without more constraints, an element defined by the phrase "including a ..." does not preclude the existence of additional same elements in the process, method, article, or apparatus that includes the element.

From the above description of the embodiments, it will be clear to a person skilled in the art that the method of the above embodiments may be implemented by means of software plus common hardware platform as needed, or by means of hardware. With such an understanding, the essence the technical solutions of the present disclosure or the part contributing to the conventional technologies may be embodied in the form of a software product, and the computer software product is stored in a storage medium (e.g. ROM/RAM, magnetic disk, optical disk) including instructions to enable a user equipment (which may be a cell phone, a computer, a server, an air conditioner or a network device) to perform the methods described in the various embodiments of the present disclosure.

The embodiments of the present disclosure are described in the above with reference to the drawings, and the present disclosure is not limited to the above specific implementations. The above specific implementations are illustrative rather than restrictive. Various forms can be made by those of ordinary skill in the art under the inspiration of the present disclosure, without departing from the purpose of the present disclosure and the protection scope of the claims, all of which fall within the protection of the present disclosure.

## Claims

1. A method for establishing a communication connection, comprising:
transmitting, by a distributed data unit (DDU), a first request to an access point (AP), wherein the first request is used to establish an interface between the DDU and the AP; or,
receiving, by a distributed data unit (DDU), a second request from an access point (AP), wherein the second request is used to establish an interface between the AP and the DDU.

2. The method according to claim 1, wherein before the transmitting, by a DDU, a first request to an AP, the method further comprises:
transmitting, by the DDU, a third request to the AP, wherein the third request is used to query a neighboring AP.

3. The method according to claim 1, further comprising: updating, by the DDU, user plane function allocation between the DDU and the AP.

4. The method according to claim 1, further comprising:
allocating, by the DDU, user plane functions to the DDU and the AP; or,
obtaining, by the DDU, an allocation result of user plane functions from a control plane node.

5. The method according to claim 4, wherein the allocating, by the DDU, user plane functions to the DDU and the AP, comprises:
allocating, by the DDU, the user plane functions to the DDU and the AP, and notifying the AP of an allocation result of the user plane functions; or,
allocating, by the DDU, the user plane functions to the DDU and the AP based on a request from the AP, and notifying the AP of an allocation result of the user plane functions.

6. The method according to claim 4, wherein the user plane functions comprise one or more of:
a security protection function, responsible for air interface security and/or integrity protection;
a data efficiency function, used for header compression of air interface data packets;
a flow mapping function, used for mapping quality of service (QoS) flows or IP flows to data bearers transmitted over air interface, or decomposing air interface data bearers into QoS flows or IP flows;
a packet organization function, used for organizing packets entering an access network into transport blocks for transmission at a physical layer;
a resource management function, responsible for radio resource management, allocation, and transmission scheduling;
a reliability control function, used for controlling reliability of air interface transmission; or,
a physical layer transmission or reception function, used for mapping transport blocks of a higher layer to a physical layer.

7. The method according to claim 6, wherein:
the packet organization function comprises: a first packet organization function and a second packet organization function, wherein the first packet organization function is responsible for processing data packets of bearers, and the second packet organization function is responsible for processing data of different logical channels; and/or,
the reliability control function comprises: a first reliability control function and a second reliability control function, wherein the first reliability control function is used for determining a higher layer reliability strategy, and the second reliability control function is used for determining a physical layer reliability strategy.

8. A method for establishing a communication connection, comprising:
transmitting, by an access point (AP), a second request to a distributed data unit (DDU), wherein the second request is used to establish an interface between the AP and the DDU; or,
receiving, by an access point (AP), a first request from a distributed data unit (DDU), wherein the first request is used to establish an interface between the DDU and the AP.

9. The method according to claim 8, wherein before the transmitting, by an AP, a third request to a DDU, the method further comprises: receiving, by the AP, a third request from the DDU, wherein the third request is used to query a neighboring AP.

10. The method according to claim 8, further comprising: updating, by the AP, a connection relationship with a user equipment (UE).

11. The method according to claim 8, further comprising: updating, by the AP, user plane function allocation between the DDU and the AP.

12. The method according to claim 8, further comprising: requesting, by the AP, the DDU to allocate user plane functions, and obtaining an allocation result of the user plane functions from the DDU.

13. The method according to claim 12, wherein the user plane functions comprise one or more of:
a security protection function, responsible for air interface security and/or integrity protection;
a data efficiency function, used for header compression of air interface data packets;
a flow mapping function, used for mapping quality of service (QoS) flows or IP flows to data bearers transmitted over air interface, or decomposing air interface data bearers into QoS flows or IP flows;
a packet organization function, used for organizing packets entering an access network into transport blocks for transmission at a physical layer;
a resource management function, responsible for radio resource management, allocation, and transmission scheduling;
a reliability control function, used for controlling reliability of air interface transmission; or,
a physical layer transmission or reception function, used for mapping transport blocks of a higher layer to a physical layer.

14. The method according to claim 13, wherein:
the packet organization function comprises: a first packet organization function and a second packet organization function, wherein the first packet organization function is responsible for processing data packets of bearers, and the second packet organization function is responsible for processing data of different logical channels; and/or,
the reliability control function comprises: a first reliability control function and a second reliability control function, wherein the first reliability control function is used for determining a higher layer reliability strategy, and the second reliability control function is used for determining a physical layer reliability strategy.

15. A device for establishing a communication connection, applied to a distributed data unit (DDU), comprising: a memory, a transceiver, and a processor;
wherein the memory is configured to store a computer program, the transceiver is configured to transmit and receive data under control of the processor, and the processor is configured to read the computer program in the memory to perform following operation:
transmitting a first request to an access point (AP), wherein the first request is used to establish an interface between the DDU and the AP; or,
receiving a second request from an access point (AP), wherein the second request is used to establish an interface between the AP and the DDU.

16. The device according to claim 15, wherein the processor is further configured to read the computer program in the memory to perform following operation: transmitting a third request to the AP, wherein the third request is used to query a neighboring AP.

17. The device according to claim 15, wherein the processor is further configured to read the computer program in the memory to perform following operation: updating user plane function allocation between the DDU and the AP.

18. The device according to claim 15, wherein the processor is further configured to read the computer program in the memory to perform following operation:
allocating user plane functions to the DDU and the AP; or,
obtaining an allocation result of user plane functions from a control plane node.

19. The device according to claim 18, wherein the processor is further configured to read the computer program in the memory to perform following operation:
allocating the user plane functions to the DDU and the AP, and notifying the AP of an allocation result of the user plane functions; or,
allocating the user plane functions to the DDU and the AP based on a request from the AP, and notifying the AP of an allocation result of the user plane functions.

20. A device for establishing a communication connection, applied to an access point (AP), comprising: a memory, a transceiver, and a processor;
wherein the memory is configured to store a computer program, the transceiver is configured to transmit and receive data under control of the processor, and the processor is configured to read the computer program in the memory to perform following operation:
transmitting a second request to a distributed data unit (DDU), wherein the second request is used to establish an interface between the AP and the DDU; or,
receiving a first request from a distributed data unit (DDU), wherein the first request is used to establish an interface between the DDU and the AP.

21. The device according to claim 20, wherein the processor is further configured to read the computer program in the memory to perform following operation: receiving a third request from the DDU, wherein the third request is used to query a neighboring AP.

22. The device according to claim 20, wherein the processor is further configured to read the computer program in the memory to perform following operation: updating a connection relationship with a user equipment (UE).

23. The device according to claim 20, wherein the processor is further configured to read the computer program in the memory to perform following operation: updating user plane function allocation between the DDU and the AP.

24. The device according to claim 21, wherein the processor is further configured to read the computer program in the memory to perform following operation: requesting the DDU to allocate user plane functions, and obtaining an allocation result of the user plane functions from the DDU.

25. A device for establishing a communication connection, applied to a distributed data unit (DDU), comprising:
a first processing unit, configured to transmit a first request to an access point (AP), wherein the first request is used to establish an interface between the DDU and the AP; or,
a second processing unit, configured to receive a second request from an access point (AP), wherein the second request is used to establish an interface between the AP and the DDU.

26. A device for establishing a communication connection, applied to an access point (AP), comprising:
a first transmission unit, configured to transmit a second request to a distributed data unit (DDU), wherein the second request is used to establish an interface between the AP and the DDU; or,
a first reception unit, configured to receive a first request from a distributed data unit (DDU), wherein the first request is used to establish an interface between the DDU and the AP.

27. A processor readable storage medium, storing a computer program, wherein the computer program is configured to cause a processor to perform the method according to any one of claims 1 to 14.
